# EUROPEAN PATENT SPECIFICATION

(11) **EP 3 916 748 B1**
(45) Date of publication and mention of the grant of the patent: **17.04.2024**
(21) Application number: 20199038.9
(22) Date of filing: 29.09.2020
(51) Int. Cl.: H01H 31/00, H02B 13/075, H02B 13/035

(54) **VOLTAGE TRANSFORMER DISCONNECTOR ARRANGEMENT**
SPANNUNGSWANDLERTRENNSCHALTERANORDNUNG
AGENCEMENT DE SECTIONNEUR DE TRANSFORMATEUR DE TENSION

(30) Priority: 29.05.2020 IN 202031022523
(43) Date of publication of application: 01.12.2021
(73) Proprietor: Siemens Aktiengesellschaft, 80333 München (DE)
(72) Inventor: MIRTHIPATI, Chiranjeevi, Doddabanahalli, Bengaluru 560067 (IN); SUNDIKAR, Sagar, 403726 Sancoale, GOA (IN); ABDAR, Ajinkya, 400046 Pune, Maharashtra (IN); HALBACH, Patrick, 64832 Babenhausen (DE); SONAWANE, Mahesh, 410210 Navimumbai, Maharashtra (IN); STACHON, Katharine, 60389 Frankfurt (Main) (DE)
(74) Representative: Patentanwaltskanzlei WILHELM & BECK

(56) References cited:
- EP-A1- 3 288 050
- WO-A1-2020/019335
- GB-A- 548 307

## Description

The present disclosure relates to switching devices. More particularly, the present disclosure relates to a gas insulated switching device having smaller carbon footprint due to the insulating gas used therein and a disconnector arrangement employed in the switching device.

Conventionally, sulphur hexafluoride (SF₆) is the most widely used insulating gas in medium voltage as well as high voltage electrical and electro-mechanical switching devices deployed for power transmission and distribution. Generally, there are four major types of electrical equipment which use SF₆ for insulation and/or interruption purposes including gas insulated circuit breakers and current interruption equipment, gas insulated transmission lines, gas insulated transformers, and gas insulated substations. For these applications the electric power industry uses about 80% of the SF₆ produced worldwide, with circuit breaker applications accounting for majority of the usage. Depending on a particular function of the gas insulated equipment, some of the insulating gas properties vary. In case of circuit breakers, an excellent thermal conductivity and a high dielectric strength along with fast thermal and dielectric recovery are the main properties required in an insulating gas, to achieve a high interruption capability in the circuit breaker. These properties enable the insulating gas to make a rapid transition between the conducting and the dielectric state of the arc, and to withstand the rise of the recovery voltage. SF₆ based circuit breakers are presently superior in their performance to alternative systems such as high pressure air blast or vacuum circuit breakers as this gas offers all of the above properties required with a compact physical device.

Despite of the desired properties possessed by SF₆, in both electrical insulation and current interruption performance, the radiative effect and the atmospheric lifetime of the SF₆ molecule renders this gas to be an aggravating agent for the greenhouse effect. Due to this, numerous studies have been undertaken by gas insulated switchgear (GIS) manufacturers to reduce SF₆ quantities and gas leakages, for example, by minimizing the size of apparatus and improving gas handling procedures. Moreover, many dielectric characterizations of natural gases such as Nitrogen, Carbon di-oxide, and/or dry air, or complex fluorinated fluid mixtures such as ketones, etc., with natural gases are being explored to identify new eco-friendly insulation mediums with dielectric strength equivalent to that of SF₆.

Majorly, the properties desired for a given gas or a gas mixture for insulation applications in an equipment, are high dielectric strength, low toxicity, low condensation temperature, thermal stability, non-flammability, chemical inactivity with the other constituent materials of the equipment, thereby, having a low impact on the environment, as well as relatively easy availability and/or moderate cost. However, with change in the insulating medium to any of the SF₆ alternative candidates, heat conducting properties and dielectric properties of the equipment change accordingly. Thereby, challenging the mechanical design of the equipment and its compatibility and inter-connectivity with other equipment.

Typically, a switchgear assembly comprises an enclosure that houses various switchgear components in one more separate compartments, such as a switching compartment comprising circuit breakers and disconnectors, a bus bar compartment comprising conductor bushings and current carrying bus bars, a cable compartment comprising feeder bushings and current transformers, and a drive compartment comprising drive circuitry for operating the circuit breakers. Typically, a circuit breaker, via a disconnector, is connected to primary contacts of the switchgear assembly supported by the conductor bushings that are connected to current-carrying bus bars. The circuit breaker is further connected to feeder cables via feeder bushings.

The cable compartment typically also includes a voltage transformer employed to reduce line voltage to a value which is suitable for measurement and/or for protecting upstream components from any surges occurring at source. This voltage transformer is connected to a disconnector arrangement that establishes contact between the feeder bushings and the voltage transformer in an ON position of the disconnector, and EARTHs the voltage transformer in an EARTH position. Conventionally, the disconnector arrangement employs a linear mechanism such a linear bellows to connect/disconnect the voltage transformer to/from the feeder bushings. However, having replaced SF6 insulating gas, the dielectric strength is compromised which results in a requirement for higher clearances to be maintained inside the compartments. Moreover, physical dimensions of the incoming feeder bushings and voltage transformer bushings also have to be increase to maintain dielectric properties which further leads to space crunch inside the cable compartment unless the overall enclosure size is increased. Increasing size of the enclosure leads to an increased footprint which is undesirable from an effort, time and cost perspective.

Document WO 2020/019335 A1 describes a switch assembly for a detection unit of a switchgear or control gear. The switch assembly comprises a shaft rotatably arranged between opposite side walls of a compartment for accommodating an electrical component. The electrical component is coupled to at least one connecting busbar of the switchgear, at least one conductive unit, each conductive unit being rotatable about the shaft between an open position and a closed position. At least one coupling mechanism is arranged in the compartment and configured to electrically couple the conductive unit to the detection unit, wherein each coupling mechanism is electrically coupled to the respective connecting busbar when the conductive unit is in the closed position, and is electrically decoupled from the respective connecting busbar when the conductive unit is in the open position and is grounded. Each coupling mechanism comprises a connecting unit for receiving a terminal of the detection unit positioned outside the compartment.

Document GB 548 307 A informs about enclosed electric switchgear for power stations and substations, having sectionalized busbars and circuit-breakers controlling tee-connections from the busbars to feeder on other external circuits. The switchgear comprises a number of panels, each having a fixed portion and a circuit-breaker maintained in engagement with the fixed portion and a circuit-breaker maintained in engagement with the fixed portion during normal operation of the gear but removal therefrom for overhaul purposes. The fixed portion includes a feeder chamber containing an isolating and earthing switch between the circuit-breaker and the feeder or other external circuit, and a busbar chamber containing a busbar section and an isolating and earthing switch between circuit-breaker and the busbar section. Said isolating and earthing switches acting to effect isolation of the circuit-breaker on both sides during normal operation of the gear and, when open, to connect associated parts of the switchgear to earth.

Document EP 3 288 050 A1 describes a potential transformer isolating device, which comprises a swinging rod 11, 31, a guide pole 14, 34 and a compression device 13, 33. The guide pole 14, 34 has a guide-pole guide end 142, 342 and an arc-shaped guide-pole connecting end 141, 341. When the guide-pole connecting end 141, 341 is under the action of external force, the guide pole can move along the swinging rod 11, 31, and the compression device 13, 33 is compressed. When the external force is removed, the guide pole 14, 34 can be reset under the action force of the compression device 13, 33. Therefore, the design of the telescopic round stick is good for improving the insulation levels of the gas insulated switchgear and the control device.

Accordingly, it is an object of the present invention, to provide a switching device comprising a sealed enclosure containing therein a sulfur hexafluoride (SF₆) free insulant at least partially surrounding electrical components comprising, for example, a cable compartment having a voltage transformer and a disconnector arrangement operably connected thereto, a switching compartment, a busbar compartment, and a drive compartment, that addresses the aforementioned problems without any increase in existing footprint of the switching device and ensuring desired dielectric stability.

According to the invention, the switching device defined by claim 1 achieves the aforementioned object. In particular, the disconnector arrangement, at any time instant via a non-linear motion, assumes an ON position for electro-mechanically coupling the voltage transformer with a feeder busbar operably connected to a feeder bushing of the cable compartment, or an EARTH position for electro-mechanically coupling the voltage transformer with the sealed enclosure having EARTH potential. The non-linear motion ensuring no increase in footprint of the switching device while maintaining desired dielectric stability.

The switching device disclosed herein is a SF6 free switchgear, for example, a medium voltage switchgear having an operational rating of up to 40.5 kilo Volts. SF₆ free insulating environment comprises, for example, a liquid, a gas, and/or vacuum insulant. Advantageously, the SF₆ free insulating environment comprises at least carbon dioxide (CO₂) and/or nitrogen (N₂). According to an embodiment of the present disclosure, N₂ is used in a proportion of about 60% to 80% and CO₂ is used in a proportion of about 40% to 20%. According to another embodiment of the present disclosure, N₂ is used in a proportion of 100%. According to yet another embodiment of the present disclosure, CO₂ is used in a proportion of 100%.

According to one aspect of the present disclosure, the non-linear motion comprises at least a rotary motion and a reciprocal motion. As used herein, rotary motion refers to an axial circular or a semi-circular motion. Also used herein, reciprocal motion refers to a lateral back and forth motion between two predefined points. The term "non-linear" motion used herein refers to a combination of motions which are not purely linear thereby, allowing an optimized use of available space within the sealed enclosure by the disconnector arrangement.

The disconnector arrangement comprises a shielded bushing and a rotary bushing operably connected via insulating shafts.

Advantageously, the shielded bushing and the insulating shafts are configured of an insulating material such as epoxy or plastic to improve dielectric strength. The rotary bushing is configured of an electrically conductive material, that is, a metal to form a conductive link between the voltage transformer and the feeder busbar when the disconnector arrangement assumes the ON position. Advantageously, the rotary bushing is insulated, for example, with an epoxy or plastic coating, to maintain desired dielectric clearances and to insulate the rotary bushing from EARTH potential.

The rotary bushing is operably connected to a gear unit and rigidly connected to a vertical insulating shaft. Advantageously, the rotary bushing is mounted on a base plate rigidly connected to the voltage transformer such that the voltage transformer bushings extend through the base plate. The gear unit is, for example, a bevel gear unit that transfers motion to the rotary bushing upon actuation. The vertical insulating shaft is operably connected to a horizontal insulating shaft. The horizontal insulating shaft is operably connected to the shielded bushing.

Advantageously, the connections between above components of the disconnector arrangement are such that a motion transferred from the gear unit causes a rotary motion of the rotary bushing and the vertical insulating shaft there-along. This rotary motion of the vertical insulating shaft causes a reciprocal motion of the horizontal insulating shaft. According to one aspect of the present disclosure, the vertical insulating shaft has a lever like protrusion to which the horizontal insulating shaft is connected resulting in a conversion of rotary motion to reciprocal motion. This reciprocal motion of the horizontal insulating shaft causes a rotary motion of the shielded bushing.

According to the invention, the shielded bushing is physically mountable on a voltage transformer bushing and is configured to at least partially accommodate therein the voltage transformer bushing. Advantageously, the shielded bushing is configured to complement a shape of the voltage transformer bushing so as to at least partially cover the voltage transformer bushing thereunder thereby, ensuring an improved dielectric stability. The shielded bushing comprises an electrically conductive contact physically insertable into the voltage transformer bushing. For example, the electrically conductive contact is a multi-lam contact configured of a good conductor metal such as copper, aluminum, etc., for withstanding the current at the feeder busbar when the disconnector arrangement is in the ON position. Advantageously, the multi-lam contact is plugged inside the voltage transformer bushing for mechanical stability. As used herein, "multi-lam contact" refers to a contact cage inserted between two contact surfaces, that contacts the two contact surfaces at multiple points, each of which acts as a conductive connection for allowing passage of current therethrough.

The shielded bushing comprises a spring-loaded electrically conductive connection pin operably connected to the electrically conductive contact, for example, via a metallic connector. Thus, the shielded bushing encloses therein electrically conductive components including the electrically conductive contact and the connection pin operably connected to one another by a metallic connector. The spring-loaded electrically conductive connection pin is configured to establish surface contact with the feeder busbar in the ON position of the disconnector arrangement and with the sealed enclosure in the EARTH position of the disconnector arrangement. Advantageously, an elastic member such as a spring is wound around the connection pin which is decompressed by default and compresses upon connection with the feeder busbar and the sealed enclosure thereby, ensuring a complete and thorough contact formation there-between.

According to one aspect of the present disclosure, the disconnector arrangement comprises a position co-ordination unit operably connected to one of the insulating shafts, for example, the horizontal insulating shaft, for enabling the shielded bushing to switch between the ON position and the EARTH position. Advantageously, the position co-ordination unit ensures that the disconnector arrangement assumes either the ON position or the EARTH position precluding any position therebetween for human safety while operating the switching device. According to this aspect, the position co-ordination unit comprises at least one spring-loaded follower member configured to move along an edge of a horizontal insulating shaft. The follower member has a torsion spring wound around one of its ends and a roller at its other end. The roller follows a profile in which the edge of the horizontal insulating shaft is designed thereby, ensuring effective toggling between the ON position and the EARTH position.

The aforementioned disconnector arrangement thus, ensures that that the disconnection happens effectively despite of a space crunch resulting from replacement of SF6 with an alternative insulant and moreover, without compromising on dielectric stability of the switching device.

The above mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a SF₆ free gas insulated switchgear, according to an embodiment of the present disclosure.
- FIG 2: illustrates a perspective view of a disconnector arrangement for voltage transformer of the SF6 free gas insulated switchgear shown in FIG 1, according to an embodiment of the present disclosure.
- FIGS 3A-3B: illustrate different positions of the disconnector arrangement for the voltage transformer of the SF₆ free gas insulated switchgear shown in FIG 1.

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

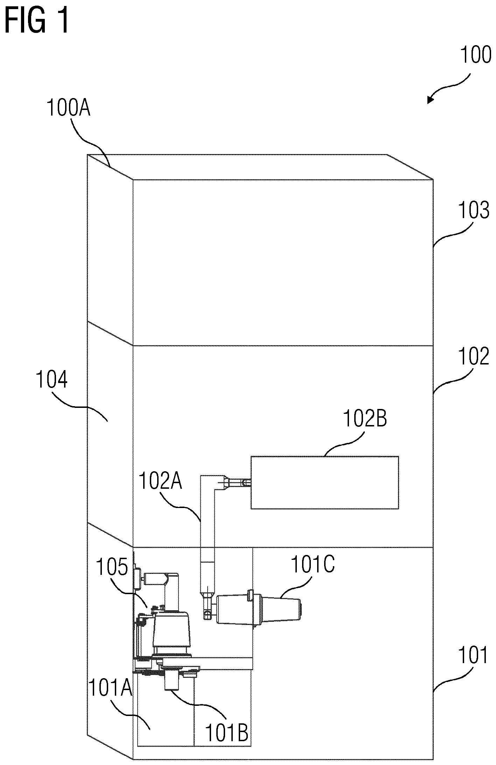

FIG 1 illustrates a SF₆ free gas insulated switchgear 100, according to an embodiment of the present disclosure. FIG 1 shows a perspective view of the switchgear 100 which is for example, a medium voltage three phase gas insulated switchgear having a vessel 100A housing there-within various electrical components required for operating the gas insulated switchgear 100. The vessel 100A contains a pressurized mixture of aforementioned eco-friendly gases such as Carbon Dioxide (CO₂) and/or Nitrogen (N₂) as an insulating medium there-within instead of SF₆. The gas insulated switchgear 100 comprises a cable compartment 101, a switching compartment 102, a busbar compartment 103 and a drive compartment 104. Each of these compartments 101-104 are separated from one another by separating walls (not shown). The cable compartment 101 includes a voltage transformer 101A having bushings 101B extending there-through. A disconnector arrangement 105 according to the present disclosure is mounted on the voltage transformer 101A and operably connected to the voltage transformer bushings 101B. The cable compartment 101 also includes feeder bushings 101C electrically coupled to feeder busbars 102A extending into the switching compartment 102 and in connection with circuit breaker unit 102B of the switching compartment 102.

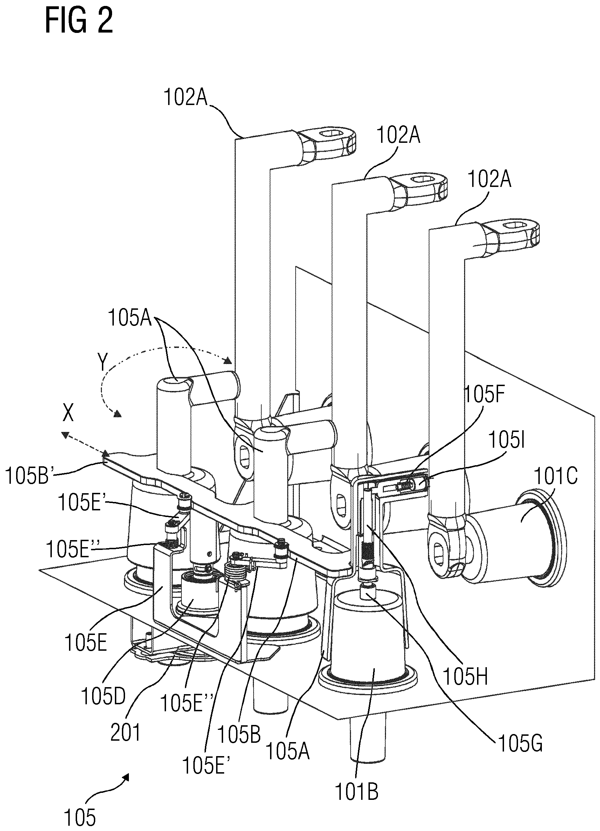

FIG 2 illustrates a perspective view of the disconnector arrangement 105 shown in FIG 1 for the voltage transformer 101A of the SF6 free gas insulated switchgear 100 shown in FIG 1, according to an embodiment of the present disclosure. FIG 2 illustrates one of the two positions that the disconnector arrangement 105 can assume. The position shown in FIG 2 is ON position wherein the voltage transformer bushing 101B is in electrical connection with the feeder bushing 10C. The disconnector arrangement 105 is an assembly of various components including a shielded bushing 105A, insulating shafts 105B and 105C, and a rotary bushing 105D operably connected to one another. The rotary bushing 105D is in turn connected to a gear unit 201, for example, a bevel gear so as to receive motion therefrom.

The shielded bushing 105A is disposed against the voltage transformer bushing 101B such that the voltage transformer bushing 101B is at least partially accommodated therein. The shielded bushing 105A is constructed of an insulating material such as epoxy or plastic and is rotatable along circular axis Y when actuated. The shielded bushing 105A comprises an electrically conductive connector arrangement there-within having an electrically conductive contact, for example, a multi-lam socket 105G that is physically insertable inside the voltage transformer bushing 101B and configured so as to accommodate an L-shaped connector 105H terminating in a connection pin 105I. The L-shaped connector 105H has an elastic member 105F, that is a compressible spring, wound around the connection pin 105I.

The shielded bushing 105A is operably connected to a horizontal insulating shaft 105B. The horizontal insulating shaft 105B is moveable along axis X when actuated causing the shielded bushing 105A to move along the circular axis Y. The horizontal insulating shaft 105B is operably connected to a vertical insulating shaft 105C which in turn is operably connected to the rotary bushing 105D which rotates axially when actuated by the gear unit 201. The horizontal insulating shaft 105B is supported by a position co-ordination unit 105E of the disconnector arrangement 105. The position co-ordination unit 105E comprises a pair of links 105E'. Each of these links 105E' have torsion springs 105E" wound around one of their ends with other ends terminating into roller structures rolling along a profile of an edge 105B' of the horizontal insulating shaft 105B. The torsion springs 105E" provide a biasing force to the links 105E' so as to ensure toggling of the shielded bushing 105A while it rotates along direction Y.

The disconnector arrangement 105 thus, when actuated by the gear unit 201 transfers a rotary motion of the rotary bushing 105D, to a rotary motion of the vertical insulating shaft 105C rigidly connected thereto, to a linear motion of the horizontal insulating shaft 105B operably connected thereto, to a rotary motion of the shielded bushing 105A rigidly connected thereto.

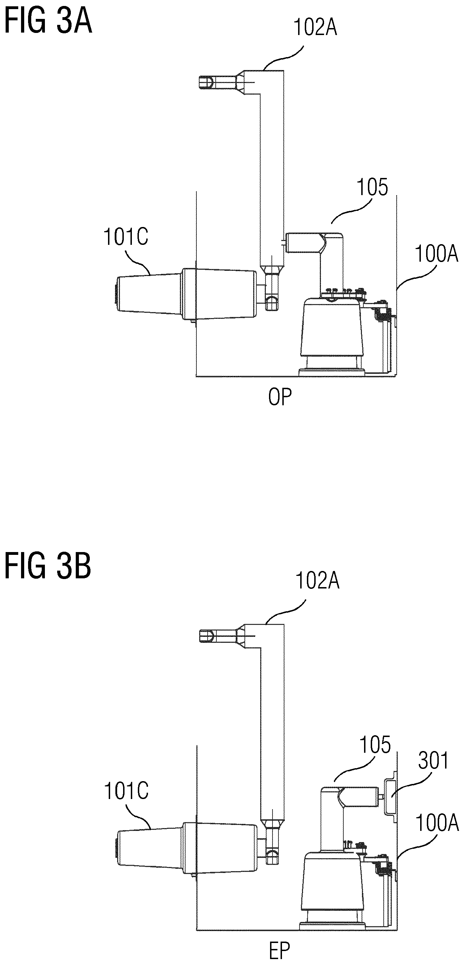

FIGS 3A-3B illustrate different positions of the disconnector arrangement 105 for the voltage transformer 101A of the SF₆ free gas insulated switchgear 100 shown in FIG 1. FIG 3A shows an ON position OP of the disconnector arrangement 105 also shown in FIG 2. FIG 3B shows an EARTH position EP of the disconnector arrangement 105. In the ON position OP, the disconnector arrangement 105 is physically connected to the feeder busbar 102A whereas in the EARTH position EP, the disconnector arrangement 105 is physically connected to a stiffener 301 mounted on the vessel 100A of the gas insulated switchgear 100. Since the vessel 100A is at EARTH potential, the disconnector arrangement 105 in its EARTH position EP gets connected to EARTH. The position co-ordination unit 105E of the disconnector arrangement 105 shown in FIG 2 ensures that the disconnector arrangement 105 assumes only two positions OP and EP and precludes the disconnector arrangement 105 from assuming any intermediate position therebetween thus, ensuring safety of human life. The elastic member 105F of the disconnector arrangement 105 shown in FIG 2 compresses when the disconnector arrangement 105 has assumed the positions OP and EP, and de-compresses there-between. This compression of the elastic member 105F ensures a complete contact with the feeder busbar 102A in the ON position OP and with the stiffener 301 in the EARTH position EP.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description.

## Claims

1. A switching device (100) comprising:
- a sealed enclosure (100A) containing therein a sulfur hexafluoride (SF₆) free insulant at least partially surrounding electrical components (101, 102, 103, and 104) for operating the switching device (100), wherein the electrical components (101, 102, 103, and 104) comprise a cable compartment (101), a switching compartment (102), a busbar compartment (103), and a drive compartment (104);
- the cable compartment (101) comprising a voltage transformer (101A) and a disconnector arrangement (105) operably connected thereto;
**characterized in that**:
- wherein the disconnector arrangement (105) is configured to assume one of an ON position (OP) and an EARTH position (EP) via a non-linear motion that is a combination of motions which are not purely linear, wherein in the ON position (ON) the disconnector arrangement (105) electro-mechanically couples the voltage transformer (101) with a feeder busbar (102A) that is operably connected to a feeder bushing (101C) of the cable compartment (101), and wherein in the EARTH position (EP) the disconnector arrangement (105) electro-mechanically couples the voltage transformer (101) with the sealed enclosure (100A) having EARTH potential, **characterized in that**
- the disconnector arrangement (105) comprises a shielded bushing (105A) and a rotary bushing (105D) operably connected via insulating shafts (105B and 105C),
- the shielded bushing (105A) is physically rotatably mountable on a voltage transformer bushing (101B) of the voltage transformer (101A) and is configured to at least partially accommodate therein the voltage transformer bushing (101B),
- the shielded bushing (105A) comprises an electrically conductive connector arrangement there-within having an electrically conductive contact (105G) physically insertable into the voltage transformer bushing (101B) and is configured so as to accommodate a L-shaped connector (105H),
- the shielded bushing (105A) comprises a spring-loaded electrically conductive connection pin (105I) operably connected to the electrically conductive contact (105G), the L-shaped connector (105H) terminating in the connection pin (105I), and
- the spring-loaded electrically conductive connection pin (105I) is configured to establish surface contact with the feeder busbar (102A) in the ON position (OP) of the disconnector arrangement (105) and with the sealed enclosure (100A) in the EARTH position (EP) of the disconnector arrangement (105).

2. The switching device (100) according to claim 1, wherein the SF₆ free insulant is one of a liquid, a gas, and a vacuum.

3. The switching device (100) according to any one of the previous claims, wherein the SF₆ free insulant comprises at least carbon dioxide (CO₂) and nitrogen (N₂).

4. The switching device (100) according to claim 1, wherein the non-linear motion comprises at least a rotary motion and a reciprocal motion.

5. The switching device (100) according to claim 1, wherein the rotary bushing (105D) is operably connected to a gear unit (201) and rigidly connected to a vertical insulating shaft (105C), and wherein the vertical insulating shaft (105C) is operably connected to a horizontal insulating shaft (105B), and wherein the horizontal insulating shaft (105B) is operably connected to the shielded bushing (105A),

6. The switching device (100) according to claim 5, wherein a motion transferred from the gear unit (201) causes a rotary motion of the rotary bushing (105D) and the vertical insulating shaft (105C), a reciprocal motion of the horizontal insulating shaft (105B), and a rotary motion of the shielded bushing (105A).

7. The switching device (100) according to claim 1, wherein the disconnector arrangement (105) comprises a position co-ordination unit (105E) operably connected to one of the insulating shafts (105B or 105C) for enabling the shielded bushing (105A) to switch between the ON position (OP) and the EARTH position (EP).

8. The switching device (100) according to claim 7, wherein the position co-ordination unit (105E) comprises at least one spring-loaded follower member (105E') configured to move along an edge (105B') of a horizontal insulating shaft (105B).

9. The switching device (100) according to any one of the previous claims, is a medium voltage switchgear having an operational rating of up to 40.5 kilo Volts.

## Patentansprüche

1. Schaltvorrichtung (100), die Folgendes umfasst:
- ein abgedichtetes Gehäuse (100A), das darin ein von Schwefelhexafluorid (SF₆) freies Isoliermittel enthält, das elektrische Komponenten (101, 102, 103 und 104) zum Betreiben der Schaltvorrichtung (100) zumindest teilweise umgibt, wobei die elektrischen Komponenten (101, 102, 103 und 104) einen Kabelraum (101), einen Schaltraum (102), einen Sammelschienenraum (103) und einen Antriebsraum (104) umfassen;
- wobei der Kabelraum (101) einen Spannungswandler (101A) und eine damit betriebsfähig verbundene Trennschalteranordnung (105) umfasst;
**dadurch gekennzeichnet, dass**:
- wobei die Trennschalteranordnung (105) so ausgebildet ist, dass sie entweder eine EIN-Stellung (OP) oder eine ERDE-Stellung (EP) über eine nichtlineare Bewegung einnimmt, die eine Kombination von Bewegungen ist, die nicht rein linear sind, wobei in der EIN-Stellung (ON) die Trennschalteranordnung (105) den Spannungswandler (101) elektromechanisch mit einer Abzweigsammelschiene (102A) koppelt, die betriebsfähig mit einer Durchführungsbuchse (101C) des Kabelraums (101) verbunden ist, und wobei die Trennschalteranordnung (105) in der ERDE-Stellung (EP) den Spannungswandler (101) elektromechanisch mit dem abgedichteten Gehäuse (100A) mit ERDE-Potential koppelt, **dadurch gekennzeichnet, dass**:
- die Trennschalteranordnung (105) eine abgeschirmte Durchführung (105A) und eine Drehdurchführung (105D) umfasst, die über Isolierwellen (105B und 105C) betriebsfähig verbunden sind,
- die abgeschirmte Durchführung (105A) physisch drehbar auf einer Spannungswandlerdurchführung (101B) des Spannungswandlers (101A) montierbar ist und so ausgebildet ist, dass sie die Spannungswandlerdurchführung (101B) zumindest teilweise in sich aufnimmt,
- die abgeschirmte Durchführung (105A) eine elektrisch leitende Verbinderanordnung darin umfasst, die einen elektrisch leitenden Kontakt (105G) aufweist, der physisch in die Spannungswandlerdurchführung (101B) einführbar ist und so ausgebildet ist, dass er einen L-förmigen Verbinder (105H) aufnimmt,
- die abgeschirmte Durchführung (105A) einen federbelasteten elektrisch leitenden Verbindungsstift (105I) umfasst, der betriebsfähig mit dem elektrisch leitenden Kontakt (105G) verbunden ist, wobei der L-förmige Verbinder (105H) in dem Anschlussstift (105I) endet, und
- der federbelastete, elektrisch leitende Verbindungsstift (105I) so ausgebildet ist, dass er in der EIN-Stellung (OP) der Trennschalteranordnung (105) einen Oberflächenkontakt mit der Abzweigsammelschiene (102A) und in der ERDE-Stellung (EP) der Trennschalteranordnung (105) mit dem abgedichteten Gehäuse (100A) herstellt.

2. Schaltvorrichtung (100) nach Anspruch 1, wobei das SF₆-freie Isoliermittel entweder eine Flüssigkeit, ein Gas oder ein Vakuum ist.

3. Schaltvorrichtung (100) nach einem der vorhergehenden Ansprüche, wobei das SF₆-freie Isoliermittel mindestens Kohlendioxid (CO₂) und Stickstoff (N₂) umfasst.

4. Schaltvorrichtung (100) nach Anspruch 1, wobei die nichtlineare Bewegung mindestens eine Drehbewegung und eine Hin- und Herbewegung umfasst.

5. Schaltvorrichtung (100) nach Anspruch 1, wobei die Drehdurchführung (105D) betriebsfähig mit einer Getriebeeinheit (201) verbunden ist und starr mit einer vertikalen Isolierwelle (105C) verbunden ist, und wobei die vertikale Isolierwelle (105C) betriebsfähig mit einer horizontalen Isolierwelle (105B) verbunden ist, und wobei die horizontale Isolierwelle (105B) betriebsfähig mit der abgeschirmten Durchführung (105A) verbunden ist,

6. Schaltvorrichtung (100) nach Anspruch 5, wobei eine von der Getriebeeinheit (201) übertragene Bewegung eine Drehbewegung der Drehdurchführung (105D) und der vertikalen Isolierwelle (105C), eine Hin- und Herbewegung der horizontalen Isolierwelle (105B) und eine Drehbewegung der abgeschirmten Durchführung (105A) bewirkt.

7. Schaltvorrichtung (100) nach Anspruch 1, wobei die Trennschalteranordnung (105) eine Positionskoordinationseinheit (105E) umfasst, die betriebsfähig mit einer der Isolierwellen (105B oder 105C) verbunden ist, um der abgeschirmten Durchführung (105A) zu ermöglichen, zwischen der EIN-Stellung (OP) und der ERDE-Stellung (EP) umzuschalten.

8. Schaltvorrichtung (100) nach Anspruch 7, wobei die Positionskoordinationseinheit (105E) mindestens ein federbelastetes Folgeelement (105E') umfasst, das so ausgebildet ist, dass es sich entlang einer Kante (105B') einer horizontalen Isolierwelle (105B) bewegt.

9. Schaltvorrichtung (100) nach einem der vorhergehenden Ansprüche, die eine Mittelspannungsschaltanlage mit einer Betriebsspannung von bis zu 40,5 Kilovolt ist.

## Revendications

1. Dispositif de commutation (100) comprenant :
- une enceinte hermétique (100A) contenant en son sein un isolant sans hexafluorure de soufre (SF₆) entourant au moins partiellement des composants électriques (101, 102, 103 et 104) pour faire fonctionner le dispositif de commutation (100), les composants électriques (101, 102, 103 et 104) comprenant un compartiment de câbles (101), un compartiment de commutation (102), un compartiment de barre omnibus (103) et un compartiment de commande (104) ;
- le compartiment de câbles (101) comprenant un transformateur de tension (101A) et un agencement de sectionneurs (105) connecté de manière fonctionnelle à celui-ci ;
**caractérisé en ce que** :
- l'agencement de sectionneurs (105) étant configuré pour prendre une parmi une position FERMÉE (OP) et une position de TERRE (EP) via un mouvement non linéaire qui est une combinaison de mouvements qui ne sont pas purement linéaires, dans la position FERMÉE (ON) l'agencement de sectionneurs (105) couplant de manière électromécanique le transformateur de tension (101) avec une barre omnibus d'alimentation (102A) qui est connectée de manière fonctionnelle à une traversée d'alimentation (101C) du compartiment de câbles (101), et dans la position de TERRE (EP) l'agencement de sectionneurs (105) couplant de manière électromécanique le transformateur de tension (101) avec l'enceinte hermétique (100A) ayant un potentiel de TERRE, **caractérisé en ce que**
- l'agencement de sectionneurs (105) comprend une traversée blindée (105A) et une traversée rotative (105D) connectée de manière fonctionnelle via des arbres isolants (105B et 105C),
- la traversée blindée (105A) pouvant être fixée de manière rotative physiquement sur une traversée (101B) de transformateur de tension du transformateur de tension (101A) et étant configurée pour accueillir au moins partiellement en son sein la traversée (101B) de transformateur de tension,
- la traversée blindée (105A) comprenant un agencement de connecteur conducteur électriquement en son sein ayant un contact conducteur électriquement (105G) pouvant être inséré physiquement dans la traversée (101B) de transformateur de tension et étant configurée de manière à accueillir un connecteur en forme de L (105H),
- la traversée blindée (105A) comprenant une broche de connexion (105I) conductrice électriquement à ressort connectée de manière fonctionnelle au contact conducteur électriquement (105G), le connecteur en forme de L (105H) terminant dans la broche de connexion (105I), et
- la broche de connexion (105I) conductrice électriquement à ressort étant configurée pour établir un contact de surface avec la barre omnibus d'alimentation (102A) dans la position FERMÉE (OP) de l'agencement de sectionneurs (105) et avec l'enceinte hermétique (100A) dans la position de TERRE (EP) de l'agencement de sectionneurs (105).

2. Dispositif de commutation (100) selon la revendication 1, l'isolant sans SF₆ étant un parmi un liquide, un gaz et un vide.

3. Dispositif de commutation (100) selon l'une quelconque des revendications précédentes, l'isolant sans SF₆ comprenant au moins du dioxyde de carbone (CO₂) et du diazote (N₂).

4. Dispositif de commutation (100) selon la revendication 1, le mouvement non linéaire comprenant au moins un mouvement rotatif et un mouvement de va-et-vient.

5. Dispositif de commutation (100) selon la revendication 1, la traversée rotative (105D) étant connectée de manière fonctionnelle à une unité de transmission (201) et connectée de manière rigide à un arbre isolant (105C) vertical, et l'arbre isolant (105C) vertical étant connecté de manière fonctionnelle à un arbre isolant (105B) horizontal, et l'arbre isolant (105B) horizontal étant connecté de manière fonctionnelle à la traversée blindée (105A).

6. Dispositif de commutation (100) selon la revendication 5, un mouvement transféré depuis l'unité de transmission (201) entraînant un mouvement rotatif de la traversée rotative (105D) et du bras isolant (105C) vertical, un mouvement de va-et-vient du bras isolant (105B) horizontal, et un mouvement rotatif de la traversée blindée (105A).

7. Dispositif de commutation (100) selon la revendication 1, l'agencement de sectionneurs (105) comprenant une unité de coordination de position (105E) connectée de manière fonctionnelle à un des arbres isolants (105B ou 105C) pour permettre à la traversée blindée (105A) de commuter entre la position FERMÉE (OP) et la position de TERRE (EP).

8. Dispositif de commutation (100) selon la revendication 7, l'unité de coordination de position (105E) comprenant au moins un élément suiveur à ressort (105E') configuré pour bouger le long d'un bord (105B') d'un bras isolant (105B) horizontal.

9. Dispositif de commutation (100) selon l'une quelconque des revendications précédentes, étant un appareillage de connexion moyenne tension ayant un fonctionnement nominal allant jusqu'à 40,5 kilo Volts.
